(19) Europäisches Patentamt
European Patent Office
Office européen des brevets

(11) **EP 1 832 774 A2**

(12) **EUROPÄISCHE PATENTANMELDUNG**

(43) Veröffentlichungstag:
**12.09.2007 Patentblatt 2007/37**

(51) Int Cl.:
*F16D 48/06* (2006.01)

(21) Anmeldenummer: **07002922.8**

(22) Anmeldetag: **12.02.2007**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **08.03.2006 DE 102006010626**

(71) Anmelder: **LuK Lamellen und Kupplungsbau Beteiligungs KG**
**77815 Bühl (DE)**

(72) Erfinder: **Serebrennikov, Boris**
**76532 Baden-Baden (DE)**

(54) **Verfahren und Vorrichtung zum Vermindern von Rupfschwingungen in einem Kraftfahrzeugantriebsstrang**

(57) Bei einem Verfahren zum Vermindern von Rupfschwingungen in einem Kraftfahrzeugantriebsstrang mit einem Antriebsmotor (22), der über eine Kupplung (4) mit dem weiteren Antriebsstrang (6) drehmomentübertragend verbindbar ist, bei welchem Verfahren das von der Kupplung (4) übertragbare Moment durch Steuerung eines ein Betätigungsglied (16) der Kupplung betätigenden Aktors beim Auftreten von Rupfschwingungen derart verändert wird, dass die Rupfschwingungen vermindert werden, wird eine den Betrieb des Aktors (27) bestimmende elektrische Spannung entsprechend folgender Formel moduliert:

$U_M = U_{MSt} * w + U_{MR} * (1-w)$, wobei

w ein Gewichtungsfaktor ist, der Werte zwischen 0 und 1 annehmen kann,

$U_{MSt}$ eine durch ein Aktormodell und eine Sollwegmodulation definierte gesteuerte Modulationsspannung ist und $U_{MR}$ eine von einer Regeleinrichtung geregelte Modulationsspannung ist, die von der Abweichung zwischen einem Sollwert und einem Istwert einer einen Betriebszustand der Kupplung (4) kennzeichnenden Größe ist.

**Fig. 2**

**Beschreibung**

Die Erfindung betrifft ein Verfahren und eine Vorrichtung zum Vermindern von Rupfschwingungen in einem Kraftfahrzeugantriebsstrang.

In modernen Kraftfahrzeugen werden zunehmend automatisierte bzw. von einem Aktor betätigte Kupplungen sowohl in Verbindung mit Handschaltgetrieben als auch in Verbindung mit automatischen Getrieben eingesetzt. Der Antriebsstrang eines Kraftfahrzeugs kann wegen der in ihm enthaltenen Elastizitäten zu Schwingungen angeregt werden, die den Fahrkomfort unangenehm beeinträchtigen.

Aus der WO 2004/027285 A1 ist ein Verfahren zum Vermindern von Rupfschwingungen des Antriebsstrangs bekannt, wobei solche Rupfschwingungen in erster Linie beim Schließen der Kupplung beim Anfahren oder nach einem Schaltvorgang auftreten. Dabei werden das von der Kupplung übertragbare Drehmoment und/oder der Kupplungsweg derart moduliert, dass den Rupfschwingungen entgegengewirkt wird. Der Sollweg eines Betätigungsgliedes der Kupplung wird additiv moduliert, was zu einer Modulation des Ist-Verstellwegs des Betätigungsgliedes und damit zu einer Modulation des übertragbaren Kupplungsmoments führt. Bei guter Qualität der Stellungs- bzw. Lagerregelung lässt sich eine effektive Phasenvorsteuerung realisieren. Dabei trifft die Wegmodulation eine kommende Halbwelle der schwingenden Getriebeeingangsdrehzahl gut genug, um das Rupfen wesentlich zu vermindern oder ganz auszulöschen. Eine reproduzierbare Einregelung der Wegmodulationen ist problematisch, da der Weg inkremental gemessen wird und die Amplitude einer Wegmodulation nur etwa 5 bis 10 Inkremente beträgt. Bei einer Rupfschwingungsperiode von 100 ms dauert eine Modulation 40 bis 50 ms. In diesem kurzen Zeitraum wird der Lagerregler 16 bis 20 Mal aufgerufen. Dabei gibt es zwangsläufig Regleraufrufe, in denen der Regler keine Änderung des Ist-Weges sieht. Damit wird der D-Anteil des Reglers sehr rau, was die Qualität der Regelung verschlechtert und zu unnötigem Energieverlust im Aktor führt.

Der Erfindung liegt die Aufgabe zugrunde, ein Verfahren und eine Vorrichtung zum Vermindern von Rupfschwingungen in einem Kraftfahrzeugantriebsstrang zu schaffen, mit den bzw. der bei geringem Energieverbrauch Rupfschwingungen wirksam vermindert bzw. unterdrückt werden können, ohne dass die Regelgüte eines den Betrieb der Kupplung regelnden System nachteilig beeinflusst wird.

Der das Verfahren betreffende Teil der Erfindungsaufgabe wird mit einem Verfahren gemäß dem Anspruch 1 gelöst.

Dieses Verfahren wird mit den Merkmalen der Ansprüche 2 bis 5 in vorteilhafter Weise weitergebildet.

Der Anspruch 6 ist auf eine Vorrichtung zur Lösung des diesbezüglichen Teils der Erfindungsaufgabe gerichtet.

Bei einem erfindungsgemäßen Verfahren zum Vermindern von Rupfschwingungen in einem Kraftfahrzeugantriebsstrang mit einem Antriebsmotor, der über eine Kupplung mit dem weiteren Antriebsstrang drehmomentübertragend verbindbar ist, bei welchem Verfahren das von der Kupplung betätigenden Moment durch Steuerung eines ein Betätigungsglied der Kupplung betätigenden Aktors beim Auftreten von Rupfschwingungen derart verändert wird, dass die Rupfschwingungen vermindert werden, wird eine den Betrieb des Aktors bestimmende elektrische Spannung entsprechend folgender Formel moduliert:

$$U_M = U_{MSt} * w + U_{MR} * (1 - w), \text{ wobei}$$

w ein Gewichtungsfaktor ist, der Werte zwischen 0 und 1 annehmen kann,
$U_{MSt}$ eine durch ein Aktormodell und eine Sollwegmodulation definierte gesteuerte Modulationsspannung ist und
$U_{MR}$ eine von einer Regeleinrichtung geregelte Modulationsspannung ist, die von der Abweichung zwischen einem Sollwert und einem Istwert einer einen Betriebszustand der Kupplung kennzeichnenden Größe ist.

Das Aktormodell kann beispielsweise durch folgende Gleichung gegeben sein:

$$\ddot{x} - k * \dot{x} = K_U * U, \text{ wobei}$$

x ein Verstellweg eines vom Aktor bewegten Bauteils ist,

$$k = \frac{(i_{ges} * K\Phi)^2}{M_{Aktor} R_a} \text{ und } K_U = \frac{i_{ges} * K\Phi}{M_{Aktor} R_a}, \text{ wobei}$$

$$M_{Aktor} = I_{E-Motor} * i_{ges}^2,$$

$i_{ges}$ = Gesamtübersetzung

$K\Phi$ = elektrische Konstante des den Aktor bildenden Elektromotors, und

$R_a$ = Widerstand.

Vorteilhaft ist, in die Gleichung $\ddot{x}$-$k*\dot{x}$=$KU$ *$U$ eine Soll-Modulationsfunktion $x_{SM}(t)$ einzusetzen, so dass die gesteuerte Modulationssteuerspannung $U_{MSt}$ durch die sich ergebende Spannung U(t) gegeben ist.

Die Modulationsspannung $U_M(t)$ kann mit einem von der Amplitude der Rupfschwingung abhängigen Faktor multipliziert werden.

Weiterhin kann zur Modulationsspannung $U_M(t)$ eine Offset-Spannung addiert werden, die von der Kupplungsstellung und der Betätigungsrichtung der Kupplung abhängt.

Bei einer Vorrichtung zum Vermindern von Rupfschwingungen in einem Kraftfahrzeugantriebsstrang mit einem Antriebsmotor, der über eine Kupplung mit dem weiteren Antriebsstrang drehmomentübertragend verbindbar ist, enthaltend einen elektromotorischen Aktor zum Betätigen der Kupplung, wenigstens einen Sensor zum Erfassen von Rupfschwingungen im Antriebsstrang und eine elektronische Steuereinrichtung, die den Betrieb des Aktors derart steuert, dass das von der Kupplung übertragbare Moment einen von Betriebsbedingungen des Antriebsstrangs abhängigen Wert hat, steuert die elektronische Steuereinrichtung den Aktor nach einem der der vorgenannten Verfahren.

Die Erfindung wird im Folgenden anhand schematischer Zeichnungen beispielsweise und mit weiteren Einzelheiten erläutert.

In den Figuren stellen dar:

Figur 1    ein Blockschaltbild eines an sich bekannten Kraftfahrzeugantriebsstrangs mit Teilen seiner Steuereinrichtung, und

Figur 2    einen elektromotorischen Kupplungsaktor mit Steuereinrichtung.

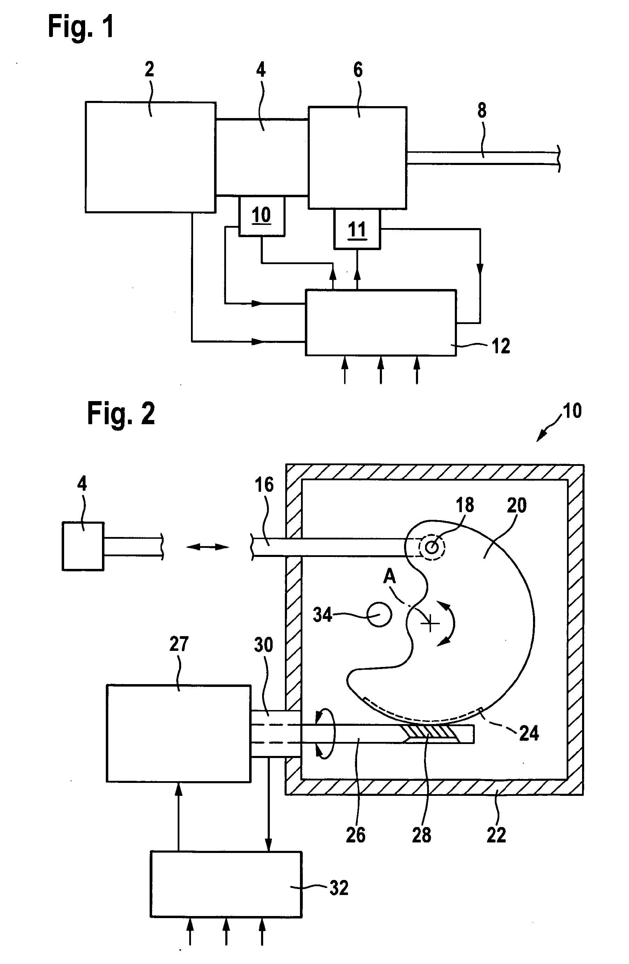

Gemäß Figur 1 weist ein Kraftfahrzeugantriebsstrang eine Brennkraftmaschine 2 auf, die über eine Kupplung 4, beispielsweise eine Reibungskupplung, mit einem Getriebe 6 verbunden ist, dessen Ausgangswelle 8 zu angetriebenen Rädern des Fahrzeugs führt.

Die Kupplung 4 ist mittels einer Betätigungseinrichtung 10 betätigbar. Das Getriebe 6 ist für den Fall, dass es ein automatisches Getriebe ist, mittels einer Betätigungseinrichtung 11 betätigbar. Zur Steuerung der Betätigungseinrichtung 10 und 11 dient eine elektronische Steuereinrichtung 12, deren Eingänge für das von der Kupplung zu übertragende Moment und das Schalten des Getriebes 6 relevante Eingangsgrößen, wie Gaspedalstellung, wirksame Übersetzung des Getriebes 6, Drehzahl der Brennkraftmaschine, Drehzahl wenigstens eines Fahrzeugrades, Schlupf der Kupplung 4 (Drehzahlunterschied zwischen der Kupplungseingangswelle und der Kupplungsausgangswelle bzw. Getriebeeingangswelle), Stellung der Kupplung, Stellung des Getriebes usw. zugeführt werden. Ausgänge der elektronischen Steuereinrichtung sind mit den Betätigungseinrichtungen 10 und 11 verbunden.

Figur 2 zeigt einen beispielhaften Aufbau der Betätigungseinrichtung 10.

Die Betätigungseinrichtung 10 enthält ein Betätigungsglied 16, das direkt, über weitere Koppelglieder, oder über eine hydraulische Übertragungsstrecke mit einem Kupplungshebel der Kupplung 4 verbunden ist, wobei die Stellung des Kupplungshebels das von der Kupplung übertragbare Moment bestimmt.

Das Betätigungsglied 16 ist über ein Lager 18 mit einem Segmentrad 20 verbunden, das um eine Achse A drehbar in einem Gehäuse 22 gelagert ist. Das Gehäuse 22 kann starr mit dem Gehäuse der Kupplung oder einem Getriebegehäuse verbunden sein.

Das Segmentrad 20 weist an einem Umfangsbereich eine Verzahnung 24 auf, die mit einer an einer Ausgangswelle 26 eines Elektromotors 27 ausgebildeten Schneckenverzahnung 28 kämmt. Zur Erfassung der Drehung der Ausgangswelle 26 ist ein Inkrementzähler 30 vorgesehen.

Zur Steuerung des Elektromotors 27 dient ein elektronisches Steuergerät 32 mit Mikroprozessor und zugehörigen Speichereinrichtungen, das Bestandteil der elektronischen Steuereinrichtung 12 (Figur 1) sein kann. Ein Eingang des Steuergerätes 32 ist mit dem Inkrementzähler 30 und weitere Eingänge sind mit Ausgängen von Sensoren oder einem anderen Steuergerät, gegebenenfalls über einen Bus, verbunden, über die das Steuergerät 32 für den Betrieb der Kupplung 4 relevante Daten empfängt. Ein Ausgang des Steuergerätes 32 ist mit dem Elektromotor 27 verbunden, der den Aktor der Kupplung 4 bildet.

Die Drehbarkeit des Segmentrades 20 ist durch wenigstens einen Anschlag 34 begrenzt, an dem das Segmentrad am Ende des Betätigungsweges des Betätigungsgliedes 16 in Schließrichtung und/oder Öffnungsrichtung der Kupplung anliegt.

In dem Steuergerät 32 ist wenigstens eine Soll-Kennlinie der Kupplung 4 gespeichert, die das übertragbare Kupplungsmoment in Abhängigkeit von der Stellung des Betätigungsgliedes 16 angibt. Damit diese Stellung im Steuergerät 32 bekannt ist, wird die Stellung des Betätigungsgliedes 16, dessen Verstellung der Zählung des Inkrementzählers 30 entspricht, in an sich bekannter Weise immer wieder aktualisiert bzw. referenziert, indem beispielsweise das Betätigungsglied 16 bis zum Anschlag betätigt wird.

Die Steuerung der Kupplung 4 bzw. der Stellung des Betätigungsgliedes 16 erfolgt in vielen Betriebsbereichen, insbesondere beim Anfahren und nach einer Schaltung, derart, dass ein vorbestimmtes übertragbares Kupplungsmoment in Abhängigkeit beispielsweise vom Motormoment, der Motordrehzahl und der Drehzahl der Ausgangswelle 8 vorgesteuert angefahren wird und das weitere Schließen der Kupplung dann geregelt erfolgt, indem ein vorbestimmter Kupplungsschlupf aufrechterhalten und dann abgebaut wird. Auch für andere Betriebszustände des Antriebsstrangs, beispielsweise einem Fahren mit sehr niederen Motordrehzahlen unter Last ist es vorteilhaft den Schlupf der Kupplung zu steuern, um für die Fahrzeuginsassen sonst spürbare Rauhigkeiten zu mindern.

In Folge von Elastizitäten im Antriebsstrang, dem Übergang zwischen Haft- und Gleitreibung usw. kann es insbesondere beim Schließen der Kupplung zu Rupfschwingungen bzw. Triebstrangschwingungen kommen, die für die Fahrzeuginsassen unangenehm sind. Solche Rupfschwingungen können durch Drehzahlschwankungen der Getriebeeingangswelle erkannt werden, deren Frequenz größer ist als die Frequenz, mit der sich der Weg des Betätigungsgliedes 16 normalerweise ändert oder mit der sich die Stellung eines Laststellorgans der Brennkraftmaschine 2 ändert.

Die bisher beschriebenen Anordnungen sind hinsichtlich ihres Aufbaus und ihrer Funktion an sich bekannt und werden daher nicht im Detail erläutert.

Erfindungsgemäß wird im Antriebsstrang vorhandenen Rupfschwingungen, die beispielsweise durch Drehzahlschwingungen der Eingangswelle des Getriebes 6, die gleichzeitig die Ausgangswelle der Kupplung 4 bilden kann, erfasst werden können, dadurch entgegengewirkt, dass die von dem Steuergerät 32 gesteuerte, am Elektromotor 27 liegende Spannung U entsprechend folgender Formel moduliert wird:

$$U_M = U_{MSt} * w + U_{MR} * (1 - w), \text{ wobei} \tag{1}$$

$U_M$ die Modulationsspannung ist,

$U_{MSt}$ eine durch ein Aktormodell und eine Sollwegmodulation definierte gesteuerte Modulationsspannung ist und

$U_{MR}$ eine von einem in dem Steuereinrichtung 12 enthaltenen Regler geregelte Modulationsspannung, die von der Abweichung zwischen beispielsweise einer Sollstellung des Betätigungsgliedes 16 und dessen Iststellung abhängt. w ist ein Gewichtungsfaktor, der die Gewichtung zwischen Steuerung und Regelung der Modulationsspannung $U_M$ bestimmt. Dieser Gewichtungsfaktor kann voreingestellt sein oder sich abhängig von Betriebszuständen des Antriebsstrangs ändern.

Die gesteuerte Modulationsspannung $U_{MSt}$ wird basierend auf einem Aktormodell und der Sollwegmodulation definiert.

Das Modell der Aktordynamik kann beispielsweise durch folgende Gleichung beschrieben werden:

$$\ddot{x} - k * \dot{x} = K_U * U \text{ , wobei} \tag{2}$$

x ein Verstellweg eines vom Aktor bewegten Bauteils, beispielsweise des Betätigungsgliedes 16 ist,

$$k = \frac{(i_{ges} * K\Phi)^2}{M_{Aktor} R_a} \text{ und } K_U = \frac{i_{ges} * K\Phi}{M_{Aktor} R_a}, \text{ wobei}$$

$$M_{Aktor} = I_{E-Motor} * i_{ges}^2,$$

$I_{E-Motor}$ = Trägheitsmoment des Elektromotors,
$i_{ges}$ = Gesamtübersetzung
$K\Phi$ = elektrische Konstante des Elektromotors, und
$R_a$ = Widerstand.

Zum Dämpfen bzw. Unterdrücken der Rupfschwingungen wird beispielsweise in an sich bekannter Weise eine beispielsweise glockenförmige Modulationsfunktion $x_{SM(t)}$ ermittelt, die in die Gleichung (2) eingesetzt wird. Aus der Gleichung (2) kann dann die gesuchte gesteuerte Modulationsspannung $U_{MST} = U(t)$ berechnet werden. Wenn eine Wegmodulation entsprechend der Form der Sollwegmodulation realisiert werden soll, wird die modulierte Steuerspannung $U_{MSt}$ mit einem Faktor multipliziert, dessen Größe beispielsweise von der Stärke bzw. Amplitude der Rupfschwingung abhängig ist. Wenn w in der Gleichung (1) zu 1 gesetzt wird, ist die so bestimmte Modulationsspannung die Spannung, die der normalen Aktorsteuerspannung zum Vermindern der Rupfschwingungen überlagert wird.

Das Aktordynamikmodell entsprechend Gleichung (2) berücksichtigt nur die Bewegung der äquivalenten Aktormasse ohne Reibung und Kupplungskraft. Dieses Modell kann bei Bedarf erweitert werden, um diese Kräfte zu berücksichtigen. Für die gesteuerte Modulationsspannung ergibt sich dann der Wert:

$$U_{MSt} = U(t) + \text{Offset, wobei}$$

der Offset-Wert beispielsweise von der Stellung der Kupplung bzw. der Stellung des Betätigungsgliedes und der augenblicklichen Betätigungsrichtung der Kupplung abhängig ist.

Wenn das Aktormodell und dessen Parametrierung zufriedenstellend sind, ist es möglich, in der Gleichung (1) w gleich 1 zu setzen, so dass der Rupfschwingung lediglich durch eine gesteuerte Modulationsspannung entgegengewirkt wird. Die Wegqualität ist dann von der Qualität der Wegmessung unabhängig und die dem Elektromotor 27 zur Modulation zugeführte Energie wird effektiv genutzt.

Wenn die Modellparameter nicht genau bekannt sind oder eine starke Streuung bzw. Temperaturabhängigkeit aufweisen, kann ein anderer Wert von w vorteilhaft sein, bei der die gewünschte Qualität der Wegmodulation durch eine Mischung aus Steuerung und Regelung erreicht wird.

**Bezugszeichenliste**

2     Brennkraftmaschine
4     Kupplung
6     Getriebe
8     Ausgangswelle
10   Betätigungseinrichtung
11   Betätigungseinrichtung
12   elektrische Steuereinrichtung
16   Betätigungsglied
18   Lager
20   Segmentrad
22   Gehäuse
24   Verzahnung
26   Ausgangswelle
27   Elektromotor
28   Schneckenverzahnung
30   Inkrementzähler
32   Steuergerät
34   Anschlag

**Patentansprüche**

**1.** Verfahren zum Vermindern von Rupfschwingungen in einem Kraftfahrzeugantriebsstrang mit einem Antriebsmotor, der über eine Kupplung mit dem weiteren Antriebsstrang drehmomentübertragend verbindbar ist, bei welchem Verfahren das von der Kupplung übertragbare Moment durch Steuerung eines ein Betätigungsglied der Kupplung betätigenden Aktors beim Auftreten von Rupfschwingungen derart verändert wird, dass die Rupfschwingungen vermindert werden,
**dadurch gekennzeichnet, dass** eine den Betrieb des Aktors bestimmende elektrische Spannung entsprechend folgender Formel moduliert wird:

$$U_M = U_{MSt} * w + U_{MR} * (1 - w), \text{ wobei}$$

w ein Gewichtungsfaktor ist, der Werte zwischen 0 und 1 annehmen kann,
$U_{MSt}$ eine durch ein Aktormodell und eine Sollwegmodulation definierte gesteuerte Modulationsspannung ist und $U_{MR}$ eine von einer Regeleinrichtung geregelte Modulationsspannung ist, die von der Abweichung zwischen einem Sollwert und einem Istwert einer einen Betriebszustand der Kupplung kennzeichnenden Größe ist.

2. Verfahren nach Anspruch 1, **dadurch gekennzeichnet, dass** das Aktormodell durch die Gleichung gegeben ist:

$$\ddot{x} - k * \dot{x} = K_U * U, \text{ wobei}$$

x ein Verstellweg eines vom Aktor bewegten Bauteils ist,

$$k = \frac{(i_{ges} * K\Phi)^2}{M_{Aktor} \, R_a} \text{ und } K_U = \frac{i_{ges} * K\Phi}{M_{Aktor} R_a}, \text{ wobei}$$

$$M_{Aktor} = I_{E-Motor} * i_{ges}^2,$$

$i_{ges}$ = Gesamtübersetzung
$K\Phi$ = elektrische Konstante des den Aktor bildenden Elektromotors, und
$R_a$ = Widerstand.

3. Verfahren nach Anspruch 2, **dadurch gekennzeichnet, dass** in die Gleichung $\ddot{x} - k*\dot{x} = K_u*U$ eine Soll-Modulationsfunktion $x_{SM}(t)$ eingesetzt wird und die gesteuerte Modulationsspannung $U_{Mst}$ durch die sich ergebende Spannung U(t) gegeben ist.

4. Verfahren nach Anspruch 3, **dadurch gekennzeichnet, dass** die Modulationssteuerspannung $U_{MSt}$ mit einem von der Amplitude der Rupfschwingung abhängigen Faktor multipliziert wird.

5. Verfahren nach Anspruch 3 oder 4, **dadurch gekennzeichnet, dass** zur Modulationssteuerspannung $U_{MSt}$ eine Offset-Spannung addiert wird, die von der Kupplungsstellung und der Betätigungsrichtung der Kupplung abhängt.

6. Vorrichtung zum Vermindern von Rupfschwingungen in einem Kraftfahrzeugantriebsstrang mit einem Brennkraftmaschine (2), der über eine Kupplung (4) mit dem weiteren Getriebe (6) und der Ausgangswelle (8) drehmomentübertragend verbindbar ist, enthaltend
einen Elektromotor (27) zum Betätigen der Kupplung,
wenigstens einen Sensor zum Erfassen von Rupfschwingungen im Antriebsstrang und eine elektronische Steuereinrichtung (32), die den Betrieb des Aktors derart steuert, dass das von der Kupplung übertragbare Moment einen von Betriebsbedingungen des Antriebsstrangs abhängigen Wert hat,
**dadurch gekennzeichnet, dass** die elektronische Steuereinrichtung den Aktor nach einem der Verfahren der Ansprüche 1 bis 5 steuert.

**Fig. 1**

2    4    6    8

10    11

12

**Fig. 2**

4    16    18    20

A

34

27    30

26    28    22

32

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004027285 A1